# EUROPEAN PATENT APPLICATION

(11) **EP 4 715 585 A1**
(43) Date of publication of application: **25.03.2026**
(21) Application number: 24810347.5
(22) Date of filing: 20.05.2024
(51) Int. Cl.: G06F 9/448, G06F 8/41

(54) **METHOD AND APPARATUS FOR INFORMATION PROCESSING, AND DEVICE AND STORAGE MEDIUM**

(30) Priority: 19.05.2023 CN 202310576150
(71) Applicant: Lemon Inc., Grand Cayman, KY1-1205 (KY); Beijing Zitiao Network Technology Co., Ltd., Beijing 100190 (CN)
(72) Inventor: ZHANG, Yi, Los Angeles, California 90066 (US); GE, Jun, Beijing 100028 (CN); ZHAO, Yi, Beijing 100028 (CN); WANG, Lei, Beijing 100028 (CN); CHEN, Zhangyi, Beijing 100028 (CN); SU, Huibin, Beijing 100028 (CN)
(74) Representative: Isarpatent
(86) International application number: PCT/CN2024/094159
(87) International publication number: WO 2024/240105

(57) **Abstract**

Embodiment of the disclosure provides a method, an apparatus, a device and a storage medium for information processing. The method includes: receiving a first user input comprising first description information related to a task on an application creation platform; determining a target prompt input matching the first user input, the target prompt input comprising second description information related to the task, and the second description information comprising at least one of: description information obtained by adjusting at least a portion of the first description information, or an extended description for at least a portion of the first description information; and providing the target prompt input to a model to obtain an indication of an execution operation of the task output by the model. Therefore, by converting the user input into the prompt input that is more informative and easier for the model to understand, the output of the model can be more accurate, the task processing efficiency and accuracy are improved, and the user experience is enhanced.

## Description

This application claims the benefit of Chinese Patent Application No. 202310576150.6, filed May 19, 2023, entitled "METHOD, APPARATUS, DEVICE AND STORAGE MEDIUM FOR INFORMATION PROCESSING", the entirety of which is incorporated herein by reference.

### FIELD

Example embodiments of the present disclosure generally relate to the field of computers, and in particular, to a method, an apparatus, a device, and a computer readable storage medium for application processing.

### BACKGROUND

With the rapid development of Internet technologies, various applications have become important tools in people's daily life. Different applications have different functions, and users may implement specific tasks or services through specific applications with specific functions. An application creation platform, in particular a low code platform, can support users to efficiently develop applications and implement application creation, application function adjustment, and the like.

### SUMMARY

In a first aspect of the present disclosure, a method of information processing is provided. The method includes: receiving a first user input including first description information related to a task on an application creation platform; determining a target prompt input matching the first user input, the target prompt input including second description information related to the task, and the second description information including at least one of: description information obtained by adjusting at least a portion of the first description information, or an extended description for at least a portion of the first description information; and providing the target prompt input to a model to obtain an indication of an execution operation of the task output by the model.

In a second aspect of the present disclosure, an apparatus for information processing is provided. The apparatus includes: an input receiving module, configured to receive a first user input including first description information related to a task on an application creation platform; a prompt determining module, configured to determine a target prompt input matching the first user input, the target prompt input including second description information related to the task, and the second description information including at least one of: description information obtained by adjusting at least a portion of the first description information, or an extension description for at least a portion of the first description information; and a prompt providing module, configured to provide the target prompt input to a model to obtain an indication of an execution of the task output by the model.

In a third aspect of the present disclosure, there is provided an electronic device. The device includes at least one processor; and at least one memory coupled to the at least one processor and storing instructions executable by the at least one processor. The instructions, when executed by the at least one processor, cause the electronic device to perform the method of the first aspect.

In a fourth aspect of the present disclosure, there is provided a computer readable storage medium having stored thereon a computer program executable by a processor to implement the method of the first aspect.

It should be understood that the content described in the SUMMARY section is neither intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of various embodiments of the present disclosure will become more apparent with reference to the following detailed description taken in conjunction with the accompanying drawings. In the drawings, the same or similar reference numeral represents the same or similar elements, where:
FIG. 1 illustrates a schematic diagram of an example environment in which embodiments of the present disclosure can be implemented;
FIG. 2 illustrates a flowchart of a process of information processing according to some embodiments of the present disclosure;
FIG. 3 illustrates a schematic diagram of an example process of information processing according to some embodiments of the present disclosure;
FIG. 4 illustrates a schematic diagram of an example mapping relationship between user inputs and prompt inputs according to some embodiments of the present disclosure;
FIG. 5 is a schematic structural block diagram of an apparatus for information processing according to some embodiments of the present disclosure; and
FIG. 6 illustrates a block diagram of an electronic device in which one or more embodiments of the present disclosure may be implemented.

### DETAILED DESCRIPTION

The embodiments of the present disclosure will be described in more detail below with reference to the accompanying drawings. Although some embodiments of the present disclosure are shown in the drawings, it would be appreciated that the present disclosure can be implemented in various forms and should not be interpreted as limited to the embodiments described herein. On the contrary, these embodiments are provided for a more thorough and complete understanding of the present disclosure. It would be appreciated that the drawings and embodiments of the present disclosure are only for illustrative purposes and are not intended to limit the scope of protection of the present disclosure.

In the description of the embodiments of the present disclosure, the term "including" and similar terms should be understood as open-ended inclusion, that is, "including but not limited to". The term "based on" should be understood as "at least partially based on". The terms "one embodiment" or "the embodiment" should be understood as "at least one embodiment". The term "some embodiments" should be understood as "at least some embodiments". The following may also include other explicit and implicit definitions.

Herein, unless explicitly stated, "in response to A" performing one step does not imply that this step is performed immediately after "A", but may include one or more intermediate steps.

It can be understood that the data involved in this technical solution (including but not limited to the data itself, or observation, data use, storage or deletion of data) should comply with the requirements of corresponding laws, regulations and relevant provisions.

It is to be understood that, before applying the technical solutions disclosed in various implementations of the present disclosure, the user should be informed of the type, scope of use, and use scenario of the information involved in the subject matter described herein in an appropriate manner in accordance with relevant laws and regulations, and the authorization of the relevant users should be obtained. The relevant users may include any type of right holder, such as individuals, enterprises, and organizations.

For example, in response to receiving an active request from the relevant user, prompt information is sent to the relevant user to explicitly inform the relevant user that the requested operation would acquire and use the user's information. Therefore, according to the prompt information, the relevant user may decide on his/her own whether to provide the information to the software or hardware, such as electronic devices, applications, servers, or storage media that execute operations of the technical solutions of the present disclosure.

As an optional but non-limiting implementation, in response to receiving an active request from the relevant user, the way of sending the prompt information to the relevant user may, for example, include a pop-up window, and the prompt information may be presented in the form of text in the pop-up window. In addition, the pop-up window may also carry a select control for the user to choose to "agree" or "disagree" to provide the information to the electronic device.

It is to be understood that the above process of notifying and obtaining the user authorization is only illustrative and does not limit the implementations of the present disclosure. Other methods that satisfy relevant laws and regulations are also applicable to the implementations of the present disclosure.

In an application creation platform, especially a low code platform, it is difficult to understand user input in a specific scenario through a preset content generation function. For example, the application creation platform or the model used by the application creation platform may understand the user input "put a determining button on this page now below the page, and select this button by default", and it may also understand "when the user clicks the button, perform the user input process A" and the like, as these inputs clearly indicate a specific task. However, the application creation platform or the model used by the application creation platform cannot understand user inputs that are strongly related to specific fields or scenarios, such as "make the page of e-commerce recommendation more consistent with the usage habits of e-commerce" or "make this page to be a page style that can conveniently view B-ultrasound results". This leads to the inability of the application creation platform to determine and perform the task indicated by the user input by the understanding capability of the application creation platform or the learning ability learned by the model.

According to the embodiments of the present disclosure, there is provided an improved solution for information processing in an application creation platform. According to this solution, a first user input is received including first description information related to a task on an application creation platform. A target prompt input matching the first user input is determined. The target prompt input is provided to the model to obtain an indication of an execution operation of the task by means of the model. In this way, the received user input is converted into a prompt input that is more informative and easier for the model to understand, and the task indicated by the user requirement is understood by means of the model. This helps assist the model in understanding the user input, makes model processing more efficient, model output more accurate, meets user expectations, and improves user experience.

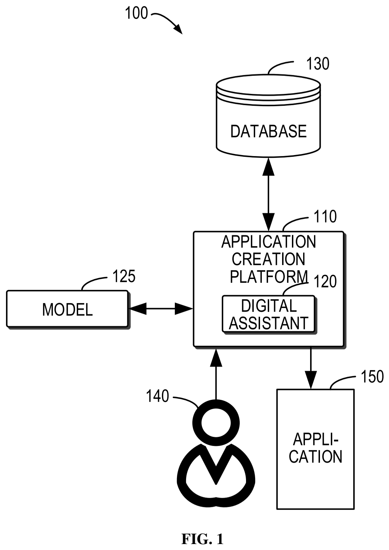

FIG. 1 illustrates a schematic diagram of an example environment 100 in which embodiments of the present disclosure can be implemented. As shown in FIG. 1, the application creation platform 110 may provide an application development and deployment environment. In some embodiments, the application creation platform 110 may be a low code platform that provides a collection of tools for application development. The application creation platform 110 may support visual development of the application, so that the developer can skip the process of manual encoding, the development cycle can be accelerated and the cost of the application. The application creation platform 110 may support any suitable platform for a user development application, such as a platform that may include an application platform as a service (aPaaS).

The application creation platform 110 may run on a suitable electronic device. The electronic device herein may be any type of device having computing capability, including a terminal device or a server device. The terminal device may be any type of mobile terminal, fixed terminal, or portable terminal, including a mobile handset, a desktop computer, a laptop computer, a notebook computer, a netbook computer, a tablet computer, a media computer, a multimedia tablet, a personal communication system (PCS) device, a personal navigation device, a personal digital assistant (PDA), an audio / video player, a digital camera / camcorder, a pointing device, a television receiver, a radio broadcast receiver, an e-book device, a gaming device, or any combination of the foregoing, including accessories and peripherals of these devices, or any combination thereof. The server device may include, for example, a computing system / server, such as a mainframe, an edge computing node, a computing device in a cloud environment, or the like. In some embodiments, the application creation platform 110 may be implemented based on cloud services.

The application creation platform 110 may be deployed locally on a user's terminal device and / or may be supported by a remote server. In some embodiments, the terminal device may run a client with the application creation platform 110, and the client may support user interaction with the application creation platform 110. When the application creation platform 110 runs on the user's terminal device, the user may directly interact with the local application creation platform 110 using the client. When the application creation platform 110 runs on the server device, the server device may implement, based on the communication connection with the terminal device, the service provision to the client running in the terminal device.

The application creation platform 110 may be deployed with a digital assistant 120. The user 140 may interact with digital assistant 120 by means of the application creation platform 110. The digital assistant 120 is used for dialogue with the user 140. The client of the application creation platform 110 may present an interaction window, such as a session window, between the user 140 and the digital assistant 120 in the client interface. The digital assistant 120, as an intelligent assistant, has an intelligent dialogue and information processing capability. The user 140 may input a session message in the session window, and the digital assistant 120 provides a reply message in response to the user's session message.

In the application creation platform 110, the digital assistant 120 may be called or awakened in an appropriate manner (e.g., shortcut, button, or voice) to present the session window with the user. In some embodiments, the digital assistant 120 may be included in a contact list of the user as a contact of the user, or included in an information stream of a chat component. By selecting the digital assistant 120, the session window with the digital assistant 120 may be launched. In some embodiments, the digital assistant 120 may also be launched in one or more components supported by the application creation platform 110, thereby presenting the session window with the digital assistant 120.

The application creation platform 110 may obtain interaction information (including session messages from the user and reply messages from the digital assistant 120) of the user 140 and the digital assistant 120 in the session window. In some embodiments, the application creation platform 110 may understand the user's session message by means of the model 125 and determine the next operation to be performed. The application creation platform 110 may interact with the model 125 to provide model inputs to the model 125 and obtain the corresponding model outputs from the model 125. The model 125 may run locally on the application creation platform 110 or remotely at a server. In some embodiments, the model 125 may be a machine learning model, a deep learning model, a learning model, a neural network, or the like. In some embodiments, the model 125 may be based on a language model (LM). The language model can have question-answering capability by learning from a large corpus of corpora. The model 125 may also be based on other suitable models.

A database 130 is configured to store data or information required for an application processing operation to be performed by the application creation platform 110. For example, the database 130 may store code and description information corresponding to respective functional blocks that make up the application. The application creation platform 110 may also perform operations such as calling, adding, deleting, updating, and the like on the function blocks in the database 130. Database 130 may also store operations that may be performed on different function blocks. For example, in a scenario in which the application 150 is to be created, the application creation platform 110 may call the corresponding function block from the database 130 to set up the application 150.

It should be understood that the structure and function of the environment 100 is described for example purposes only and does not imply any limitation to the scope of the present disclosure.

Some example embodiments of the present disclosure will be described in detail below with reference to examples of the accompanying drawings.

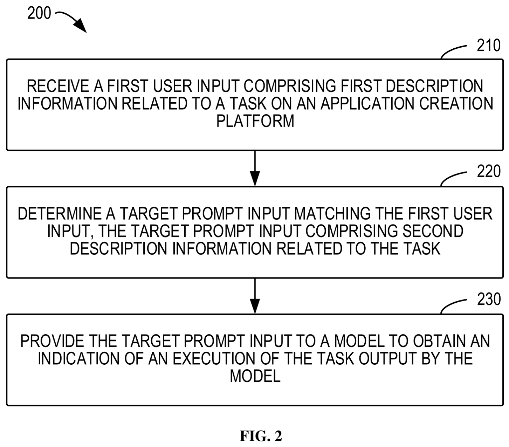

FIG. 2 illustrates a flowchart of a process 200 for information processing according to some embodiments of the present disclosure. The process 200 may be implemented at the application creation platform 110. For ease of discussion, the process 200 will be described with reference to the environment 100 of FIG. 1.

At block 210, the application creation platform 110 receives a first user input including first description information related to a task on the application creation platform 110.

In some embodiments, the client corresponding to the application creation platform 110 may present the session window between the user 140 and the digital assistant 120 at the client interface. The session window may be in any shape, any size, any color, or any location. The session window may include interface elements for information interaction, such as input boxes, message lists, message bubbles, and the like. The session message in the session window may include content in one or more formats, for example, including text, image, audio, video, and the like. The digital assistant 120 can be used to interact with the user 140 during application processing of the application creation platform 110. The application creation platform 110 may receive the first user input through the session window, for example.

The first user input received by the application creation platform 110 may be a message input by the user 140 in an input box of the session window or by other means (e.g., voice input, etc.). In some embodiments, the user input may include input in a multimodal form, such as text input (e.g., input in natural language form), voice input, image input, video input, and so forth.

The application creation platform 110 may determine a specific task indicated by the task through communication between the user 140 and the digital assistant 120. The first user input may indicate any task to be performed on the application creation platform. In some embodiments, the indicated task may include an application processing task for processing a specific application or portion of an application. In some embodiments, the task may include a creation task for the target application (for example, creating a new application), or an adjustment task for at least a portion of the target application (for example, an adjustment task for a page, a data table, or an operation control of the target application).

In some embodiments, the application creation platform 110 may understand the user input and determine a response to the user input by means of the model 125. In some embodiments, certain user inputs, if directly input to the model 125, may be difficult to be accurately understood by the model 125, particularly when the user input relates to specific scenarios, specific fields. For example, if the first user input received by the application creation platform 110 is "make the page of e-commerce recommendation more consistent with the usage habits of e-commerce", the model 125 may not accurately determine how the user 140 specifically expects to adjust the interface. In this case, if the description information in the user input is directly used as an input to the model 125, the obtained model output may be difficult to be satisfactory, resulting in the final task execution failing to meet the user requirement. In the embodiments of the present disclosure, instead of directly providing the information in the user input to the model 125 for processing, the application creation platform 110 converts the user input into a prompt input richer in information and easier to understand by the model, and provides the prompt input to the model 125 for processing, and determines an execution operation of the task from the output of the model 125.

At block 220, the application creation platform 11 determines a target prompt input matching the first user input. The determined target prompt input includes second description information related to the task, and the second description information includes at least one of: description information obtained by adjusting at least a portion of the first description information, or an extended description for at least a portion of the first description information.

In the embodiments of the present disclosure, the first description information input by the user may be adjusted and / or extended to obtain the second description information, so that the prompt input including the second description information makes the model easier to understand, so that the model can give an accurate model output consistent with expectations. In some embodiments, the user intent can be expressed more clearly by adjusting a partial description in the first description information input by the user. In some embodiments, some or all the first description information may be extended. The extended description may be an explanation or assistance of the first description information or a task indicated by the first description information, for example, may be an explanation, definition, or a specific example of some words in the first description information, and / or may be context information giving a supplement. For example, if the user input is "make the page of e-commerce recommendation more consistent with the usage habits of e-commerce", the second description information input by the target prompt may include a sample page that meets the usage habits of e-commerce, and / or a detailed definition of a sample page layout that meets the usage habits of e-commerce. The extended description in the second description information may enable the model 125 to better understand specific tasks in a specific scenario and in a specific field subsequently, so as to better determine the execution operation on the task, to assist the application creation platform 110 in performing a corresponding task.

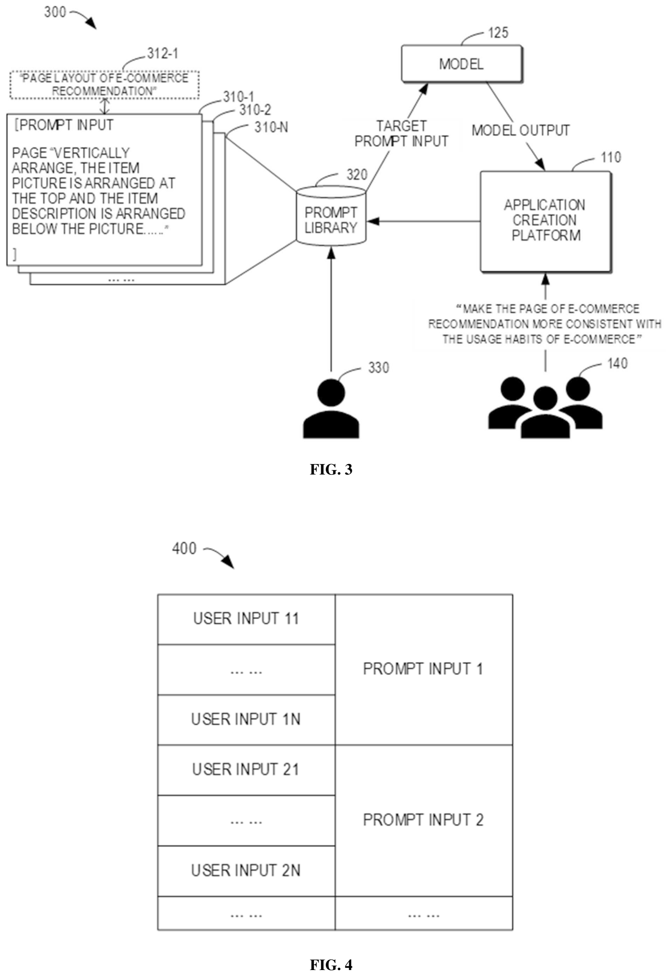

In some embodiments, one or more prompt inputs may be configured and stored in a prompt library accessible to the application creation platform 110. FIG. 3 illustrates a schematic diagram of an example process 300 of information processing according to some embodiments of the present disclosure. As shown in FIG. 3, the application creation platform 110 may receive the user input "make the page of e-commerce recommendation more consistent with the usage habits of e-commerce" from the user 140. The application creation platform 110 may determine, from the prompt library 320, a prompt input 310-1 to which the user input is mapped. The prompt library 320 herein may be included in the database 130 of FIG. 1, or independent of the database 130. The prompt library 320 includes a plurality of prompt inputs 310 (e.g., prompt inputs 310-1, 310-2, ···, 310-N, where N is a positive integer greater than 1).

The application creation platform 110 may determine, from the one or more prompt inputs, the target prompt input matching the current first user input. In some embodiments, the application creation platform 110 may select the target prompt input matching the first user input from the one or more prompt inputs. The selected target prompt input may be, for example, a prompt input having the highest matching degree (and greater than a predetermined threshold) input by the first user. The matching degree herein indicates the semantic relevance between the first user input and the prompt input. The application creation platform 110 determines the semantic relevance between the user input and the prompt input utilizing various ways. The higher the semantic relevance is, the closer the expression between the first user input and the prompt input is, thus considering the two to be more matching. For example, respective prompt inputs and first user inputs may be respectively converted into semantic vectors representing their semantics, and matching degrees between the prompt inputs and the first user inputs may be determined by calculating distances between the semantic vectors of respective prompt inputs and the semantic vectors of respective first user inputs. The target prompt input may be a prompt input having a higher matching degree (for example, the highest matching degree and higher than a predetermined threshold) with the first user input.

In some embodiments, a mapping relationship between the user inputs and the prompt inputs may be configured, and the mapping relationship is stored in the prompt library accessible to the application creation platform 110. The mapping relationship may include a mapping between one or more candidate user inputs and one or more prompt inputs. In the mapping relationship, the user inputs and the prompt inputs may be a one-to-one mapping relationship or a many-to-one mapping relationship. In the mapping relationship, the candidate user input may be in the form related to the prompt input that the user may input. The candidate user inputs included in the mapping relationship may be multimodal, such as text input (e.g., input in natural language form), voice input, image input, video input, and so forth. In some embodiments, the mapping relationship may be a mapping relationship between the natural language sequence and the prompt input, that is, the prompt may be mapped to one or more natural language sequences.

In the example of FIG. 3, the prompt library 320 may include a mapping relationship between the natural language sequence and the prompt input. As shown in FIG. 3, a prompt input 310-1 is mapped to a natural language sequence 312-1. Although not shown, one or more other prompt inputs 310 in the prompt library 320 may each be mapped to one or more natural language sequences.

In some embodiments, considering that different users have different expressions for the same task, the same prompt input in the mapping relationship may be mapped to a plurality of candidate user inputs (for example, a plurality of natural language sequences), that is, the user inputs have a many-to-one relationship with the prompt inputs. For example, the plurality of natural language sequences "page layout of e-commerce recommendation", "style of e-commerce recommendation page", and "recommendation page consistent with an e-commerce scenario" may correspond to the same prompt input, and the prompt input may include specific description information about adjusting a page to a page layout of e-commerce recommendation. It should be understood that a certain or some prompt inputs in the mapping relationship may also be mapped to a single candidate user input, which is not limited in the scope of the embodiments of the present disclosure.

FIG. 4 illustrates a schematic diagram of an example mapping relationship 400 between user inputs and prompt inputs according to some embodiments of the present disclosure. As shown in FIG. 4, the mapping relationship 400 may include a plurality of candidate user inputs and a plurality of prompt inputs. Each of the prompt inputs may be mapped to one or more candidate user inputs. For example, a user input 11 to a user input 1N may be mapped to a prompt input 1; a user input 21 to a user input 2N may be mapped to a prompt input 2, and so on.

In some embodiments, if the mapping relationship between the user inputs and the prompt inputs is pre-built, the application creation platform 110 may determine the target prompt input matching the first user input based on the mapping relationship. Specifically, the application creation platform 110 may determine a target user input matching the first user input from the mapping relationship and determine a prompt input to which the target user input in the mapping relationship is mapped as the target prompt input. The target user input may be selected based on the matching degrees between the first user input and respective candidate user inputs in the mapping relationship. The matching degree herein indicates a relevance between the first user input and the candidate user input.

In the embodiments where the user input is a natural language form, the matching degree may indicate a semantic relevance between the first user input and the candidate user input. The application creation platform 110 determines the semantic relevance between the two natural language sequences utilizing various ways. The higher the semantic relevance is, the closer the expression between the first user input and the prompt input is, thus considering the two to be more matching. For example, respective natural language sequences and the first user inputs in the mapping relationship may be respectively converted into semantic vectors representing their semantics, and matching degrees between the natural language sequences and the first user inputs may be determined by calculating distances between the semantic vectors of respective natural language sequences and the semantic vectors of respective first user inputs. The target user input may be a natural language sequence having a higher matching degree (e.g., the highest matching degree and higher than a predetermined threshold) with the first user input.

In some embodiments, if the first user input and / or the candidate user inputs in the mapping relationship are another modality, for example, image, video, or the like, the matching degrees between the first user input and the candidate user inputs in the mapping relationship may be determined based on the data correlation algorithm in the corresponding modality, so as to select the corresponding target prompt input.

In the example of FIG. 3, the user input "make the page of e-commerce recommendation more consistent with the usage habits of e-commerce" may match the natural language sequence "page layout of e-commerce recommendation" in the mapping relationship, and the prompt input 310-1 is mapped to the natural language sequence. Accordingly, the application creation platform 110 may determine that the prompt input 310-1 is a prompt input that the user input matches.

As previously described, a certain prompt input in the mapping relationship may be mapped to a plurality of candidate user inputs (e.g., multiple natural language sequences). In this case, for the prompt input, the application creation platform 110 may determine respective matching degrees between the first user input and the plurality of candidate user inputs in the mapping relationship. The application creation platform 110 may select the target user input matching the first user input from the plurality of candidate user inputs based on the determined matching degrees. For example, the application creation platform 110 may determine the candidate user input having the highest matching degree with the first user input as the target user input matching the first user input. Further, the application creation platform 110 may determine, in response to determining that the first user input matches the target user input in the mapping relationship, a prompt input to which the target user input is mapped from the mapping relationship as the target prompt input. As shown in FIG. 4, if the target user input is the user input 21, the application creation platform 110 may select the prompt input 2 to which the user input 21 is mapped from the plurality of prompt inputs included in the mapping relationship 400, and determine the prompt input 2 as the target prompt input.

In some embodiments, the mapping relationships corresponding to different fields (or scenarios) may be different. For example, the mapping relationships corresponding to the medical field and the game field are different. In particular, in different mapping relationships, different prompt inputs may be configured. To ensure the accuracy of the finally determined prompt input, the mapping relationship herein may be a target field specific to the application creation platform. That is, the prompt inputs included in the mapping relationship are prompt inputs for the target domain, which helps to improve the subsequent determination of the accurate model generation by means of the model 125.

In some embodiments, the configured prompt input, or the mapping relationship between the user inputs and the prompt inputs, may be updated during use. The generation and updating of the prompt inputs or the mapping relationship will be described in more detail below.

Referring back to FIG. 2, after determining the target prompt input, at block 230, the application creation platform 110 provides the target prompt input to the model 125 to obtain an indication of an execution operation of the task output by the model 125.

Since the target prompt input contains more supplements and extensions to the task the user desires to perform, the model 125 can more accurately understand the user expectations from the target prompt input, thereby determining the indication of the execution operation of the task. The indication of the execution operation of the task may be determined as the model output, provided by the model 125 to the application creation platform 110. For example, in the example of FIG. 3, the prompt input 310-1 may be provided to the model 125 as the target prompt input to which the user input is mapped, so that the model 125 outputs the indication of the execution operation of the task.

Upon receiving the indication of the execution operation of the task provided by the model 125, in some embodiments, the application creation platform 110 may present the indication including the execution operation of the task as a reply to the first user input. For example, in the example of FIG. 3, if the user inputs the session message "make the page of e-commerce recommendation more consistent with the usage habits of e-commerce" in the session window with the digital assistant, a reply to the session message may be presented based on the output of the model 125. In some embodiments, the application creation platform 110 may determine a specific execution operation of the task indicated by the first user input based on the indication of the execution operation of the task provided by the model 125. The operations performed by the application creation platform 110 may be operations provided by the model 125, or may be adjusted based on the operations provided. Apparently, the application creation platform 110 may also directly perform the execution operation of the task indicated by the model 125.

In some embodiments, after the application creation platform 110 obtains the indication about the task from the model 125, the reply to the first user input may also be presented through the session window between the user 140 and the digital assistant 120. The reply herein includes at least the indication of the execution operation of the task (e.g., describing how to perform the task), and / or includes an indication of a task execution result including the task. In this way, the user can know in time how the task is to be performed, how the execution result is, and so on.

How to generate and update the prompt inputs and / or the mapping relationship between the user inputs and the prompt inputs will be described below. In some embodiments, the prompt inputs in the prompt library may be pre-processed through prompt engineering to fill in prompts related to user input within the relevant field into the input template of model 125. The prompt herein may be a specific word predefined in the relevant field. The prompt input may be in the form of an input that conforms to the model 125. In some embodiments, the prompt input and /or the mapping relationship between the prompt inputs and the user inputs may be predetermined by a worker in the relevant field and provided directly to the application creation platform 110. For example, in FIG. 3, a prompt engineer 330 (also referred to as a prompt developer) may provide that. The prompt engineer 330 may determine respective prompt inputs and / or candidate user inputs to which the prompt inputs are mapped, for example, by offline communication or by other fields.

In some embodiments, in a process of performing various tasks indicated by the user on the application creation platform 110, a new prompt input is generated and / or a candidate user input to which the prompt input is mapped by collecting user feedback information for the task.

The generation of the "target prompt input" to which the first user input is mapped is taken as an example. The application creation platform 110 may obtain a second user input that includes description information for a task of the same type as that of the first user input. The application creation platform 110 may obtain user feedback information (referred to herein as "second user feedback information" for differentiation). The second user feedback information is feedback for a reply of the second user input, and the second user input includes description information for the task of the same type as the task. That is, other users expect to perform similar tasks on the application creation platform 110, and after the application creation platform 110 performs the task by means of the model 125, the user feedback information may be collected.

In some embodiments, the application creation platform 110 may determine the second user feedback information based on a user operation behavior detected after the indication of the execution operation of the task or after completion of the execution of the task. The user operation behavior herein may be, for example, feedback input by the user 140 in the session window, for example, the user may express agreement or liking for the execution of tasks or the results of task execution. In some embodiments, if the task has been completed according to the indicated operation, the application creation platform 110 may determine that the user is not satisfied with the execution operation of the task provided by the model 125 in response to detecting a revocation or deletion behavior of one or more execution operations of the user on the task.

The application creation platform 110 may generate the target prompt input based at least on the second user feedback information. In some embodiments, if the second user feedback information indicates that the execution of the task fails to meet an expected objective, the application creation platform 110 may determine a requirement for generating the target prompt input. In some cases, if the prompt input matching the second user input was not previously found, the application creation platform 110 is to generate the input of the model 125 based on the description information in the second user input, which may cause the model 125 to not accurately understand the task to be performed by the user, resulting in the execution of the task failing to be satisfied by the user. In the embodiments of the present disclosure, by collecting user feedback, a new prompt input may be created, and / or a new prompt input and a user input may be added in the mapping relationship. In this way, new prompt inputs may be used to improve efficiency of subsequent similar tasks and improve user satisfaction.

In some embodiments, the target prompt input may be provided by a prompt engineer (e.g., prompt engineer 330 in FIG. 3). For example, the second user input and / or the second user feedback information may be presented to the prompt engineer to instruct the prompt engineer to generate a new prompt input.

In some embodiments, if the mapping relationship between the user inputs and the prompt inputs needs to be used, after generating the target prompt input matching the second user input, the application creation platform 110 may further generate at least one candidate user input to which the target prompt input is mapped in the mapping relationship. In some embodiments, the application creation platform 110 may obtain a plurality of different second user inputs and generate the target prompt input matching the plurality of second user inputs. The application creation platform 110 may determine the plurality of candidate user inputs to which the target prompt input is mapped based on the plurality of second user inputs.

In some embodiments, one or more prompt inputs, and / or one or more mapped candidate user inputs (in examples using mapping relationships) may also be continuously added, deleted, or updated during the running process of the application creation platform 110.

Assuming that the first user input mentioned above is still taken as an example, the first user input indicates a task on the application creation platform 110. As described above, the first user input is converted into the target prompt input to be provided to the model 125, and the indication of the execution operation of the task is obtained from the model 125. On this basis, in some embodiments, the application creation platform 110 may obtain first user feedback information for the task. In some embodiments, the application creation platform 110 may receive a session message from the user 140 for a reply from the session window and use it as the first user feedback information for the task. In some embodiments, the application creation platform 110 may further determine the first user feedback information based on the user operation behavior detected after the indication or completion of the execution operation of the task. The user operation behavior herein may be, for example, feedback input by the user 140 in the session window, for example, the user may indicate that the user 140 may express agreement or liking for the execution of tasks or the results of task execution. In some embodiments, if the task has been completed according to the indicated operation, the application creation platform 110 may determine that the user is not satisfied with the execution operation of the task provided by the model 125 in response to detecting a revocation or deletion behavior of one or more execution operations of the user on the task.

The application creation platform 110 may then determine an adjustment to the target prompt input based at least on the first user feedback information. In some embodiments, the application creation platform 110 may determine that the target prompt input is to be adjusted if the first user feedback information indicates that the execution of the task does not satisfy the expected objective. In this case, if the first user feedback information may indicate the adjustment manner, the application creation platform 110 may directly adjust the target prompt input based on the adjustment manner indicated by the first user feedback information. In some embodiments, if the first user feedback information cannot indicate the adjustment manner, the application creation platform 110 may present a clarification guidance to the user to guide the user to clarify its desired adjustment manner.

In some embodiments, if it is determined that the target prompt input is to be adjusted, the application creation platform 110 may present a prompt adjustment indication to a prompt engineer (such as the prompt engineer 330 in FIG. 3), to indicate that a certain prompt input (that is, the target prompt input) needs to be adjusted. In some embodiments, the application creation platform 110 may further present user feedback information to the prompt engineer to help the prompt engineer to understand how the target prompt input should be adjusted. The target prompt input adjusted by the prompt engineer may be stored into the prompt library.

In some embodiments, in the case where the mapping relationship between the user inputs and the prompts is used, in addition to or as an alternative to updating the prompt input, the user input to which the one or more prompt inputs are mapped may be similarly updated based on the user feedback. For example, for a certain prompt input, one or more user inputs to which the prompt input is mapped may be added, deleted, and modified.

By updating the prompt inputs in the prompt library and / or the mapping relationship between the user inputs and the prompt inputs based on user feedback in the running process, the user expectation in the specific field or the specific scenario, and the expression mode of the user when inputting can be synchronized in real time, so that the model 125 always keeps an accurate understanding of user input.

According to the embodiments of the present disclosure, the received user input may be provided to the model by converting the received user input into the prompt input more easily understood by the model, and the task indicated by the user requirement is understood by means of the model. Since the user input is converted into a prompt input with richer information and easier understanding by the model, the model processing is more efficient, the model output is more accurate, and the task processing efficiency and accuracy of the application creation platform are improved.

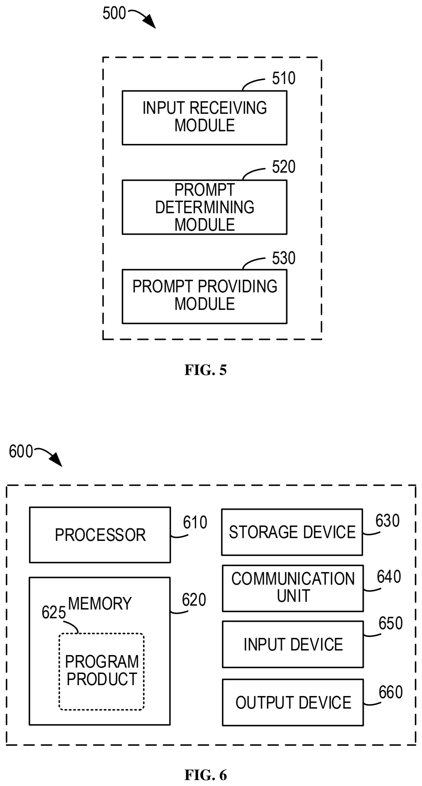

FIG. 5 is a schematic structural block diagram of an apparatus 500 for information processing according to some embodiments of the present disclosure. The apparatus 500 may be implemented, for example, in or included in the application creation platform 110. The various modules / components in the apparatus 500 may be implemented by hardware, software, firmware, or any combination thereof.

As shown, the apparatus 500 includes an input receiving module 510 configured to receive a first user input including first description information related to a task on an application creation platform. The apparatus 500 further includes a prompt determining module 520 configured to determine a target prompt input matching the first user input, the target prompt input including second description information related to the task, and the second description information including at least one of: description information obtained by adjusting at least a portion of the first description information, or an extended description for at least a portion of the first description information. The apparatus 500 further includes a prompt providing module 530 configured to provide the target prompt input to a model to obtain an indication of an execution of the task output by the model.

In some embodiments, the prompt determining module 520 includes: a sequence determining module configured to determining, in a mapping relationship between user inputs and prompt inputs, that the first user input matches a target user input in the mapping relationship; and a target prompt input determining module configured to determine, from the mapping relationship, a prompt input to which the target user input is mapped as the target prompt input.

In some embodiments, the mapping relationship includes a mapping relationship between natural language sequences and prompt inputs.

In some embodiments, the target prompt input is mapped to a plurality of candidate user inputs in the mapping relationship, and the sequence determining module includes: a matching degree determining module configured to determine respective matching degrees between the first user input and the plurality of candidate user inputs; and a sequence selecting module configured to select, based on the determined matching degrees, the target user input matching the first user input from the plurality of candidate user inputs.

In some embodiments, the task includes a creation task for a target application or an adjustment task for at least a portion of the target application.

In some embodiments, the mapping relationship is specific to a target domain associated with the application creation platform.

In some embodiments, the apparatus 500 further includes a reply presenting module configured to present a reply to the first user input, the reply including the indication of the execution of the task, or including an indication of a task execution result of the task.

In some embodiments, the apparatus 500 further includes: a feedback information obtaining module configured to obtain first user feedback information for the task; and an adjustment determining module configured to determine an adjustment to the target prompt input based at least on the first user feedback information.

In some embodiments, the feedback information obtaining module includes: a feedback information determining module configured to determine the first user feedback information based on a user operation behavior detected after the indication of the execution operation of the task or after completion of the execution of the task.

In some embodiments, the adjustment determining module includes a determining module configured to in accordance with a determination that the first user feedback information indicates that the execution of the task fails to meet an expected objective, determine that the target prompt input is to be adjusted.

In some embodiments, the apparatus 500 further includes: a second user feedback information obtaining module configured to obtain second user feedback information that is feed back for a reply to a second user input, the second user input including description information of a task with a same type as the task; and a prompt input generating module configured to generate the target prompt input based at least on the second user feedback information.

The modules included in the apparatus 500 may be implemented in various manners, including software, hardware, firmware, or any combination thereof. In some embodiments, one or more modules may be implemented using software and / or firmware, such as machine-executable instructions stored on a storage medium. In addition to or as an alternative to machine-executable instructions, some or all of modules in the apparatus 500 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 6 illustrates a block diagram of an electronic device 600 in which one or more embodiments of the present disclosure may be implemented. It should be understood that the electronic device 600 shown in FIG. 6 is only an example and should not constitute any limitation on the functionality and scope of the embodiments described herein. The electronic device 600 as shown in FIG. 6 may be used to implement the application creation platform 110 in FIG. 1.

As shown in FIG. 6, the electronic device 600 is in the form of a general computing device. The components of electronic device 600 may include, but are not limited to, one or more processors or processors 610, a memory 620, a storage device 630, one or more communication units 640, one or more input devices 650, and one or more output devices 660. The processor 610 may be an actual or virtual processor and can execute various processes based on the programs stored in the memory 620. In a multiprocessor system, multiple processors execute computer executable instructions in parallel to improve the parallel processing capability of the electronic device 600.

The electronic device 600 typically includes multiple computer storage medium. Such medium may be any available medium that is accessible to the electronic device 600, including but not limited to volatile and non-volatile medium, removable and non-removable medium. The memory 620 may be volatile memory (for example, a register, cache, a random access memory (RAM)), a non-volatile memory (for example, a read-only memory (ROM), an electrically erasable programmable read-only memory (EEPROM), a flash memory), or any combination thereof. The storage device 630 may be any removable or non-removable medium, and may include a machine readable medium such as a flash drive, a disk, or any other medium, which may be used to store information and/or data and may be accessed within the electronic device 600.

The electronic device 600 may further include additional removable/non-removable, volatile/non-volatile storage medium. Although not shown in FIG. 6, a disk drive for reading from or writing to a removable, non-volatile disk (such as a "floppy disk"), and an optical disk drive for reading from or writing to a removable, non-volatile optical disk may be provided. In these cases, each driver may be connected to the bus (not shown) by one or more data medium interfaces. The memory 620 may include a computer program product 625, which has one or more program units configured to perform various methods or acts of various embodiments of the present disclosure.

The communication unit 640 communicates with a further electronic device through the communication medium. In addition, functions of components in the electronic device 600 may be implemented by a single computing cluster or multiple computing machines, which can communicate through a communication connection. Therefore, the electronic device 600 may be operated in a networking environment using a logical connection with one or more other servers, a network personal computer (PC), or another network node.

The input device 650 may be one or more input devices, such as a mouse, a keyboard, a trackball, etc. The output device 660 may be one or more output devices, such as a display, a speaker, a printer, etc. The electronic device 600 may further communicate with one or more external devices (not shown) through the communication unit 640 as required. The external device, such as a storage device, a display device, etc., communicate with one or more devices that enable users to interact with the electronic device 600, or communicate with any device (for example, a network card, a modem, etc.) that makes the electronic device 600 communicate with one or more other electronic devices. Such communication may be executed via an input/output (I/O) interface (not shown).

According to example implementation of the present disclosure, a computer readable storage medium is provided, on which computer executable instructions are stored, where the computer executable instructions are executed by the processor to implement the method described above. According to example implementation of the present disclosure, a computer program product is also provided. The computer program product is physically stored on a non-transient computer-readable medium and includes computer-executable instructions, which are executed by the processor to implement the method described above.

Various aspects of the present disclosure are described herein with reference to the flow chart and/or the block diagram of the method, the apparatus, the device and the computer program product implemented in accordance with the present disclosure. It would be appreciated that each block of the flowchart and/or the block diagram and the combination of each block in the flowchart and/or the block diagram may be implemented by computer-readable program instructions.

These computer-readable program instructions may be provided to the processors of general-purpose computers, specialized computers or other programmable data processing devices to produce a machine that generates an apparatus to implement the functions/actions specified in one or more blocks in the flow chart and/or the block diagram when these instructions are executed through the computer or other programmable data processing apparatuses. These computer-readable program instructions may further be stored in a computer-readable storage medium. These instructions enable a computer, a programmable data processing apparatus and/or other devices to work in a specific way. Therefore, the computer-readable medium containing the instructions includes a product, which includes instructions to implement various aspects of the functions/actions specified in one or more blocks in the flowchart and/or the block diagram.

The computer-readable program instructions may be loaded onto a computer, other programmable data processing apparatus, or other devices, so that a series of operational steps may be performed on a computer, other programmable data processing apparatus, or other devices, to generate a computer-implemented process, such that the instructions which execute on a computer, other programmable data processing apparatuses, or other devices implement the functions/acts specified in one or more blocks in the flowchart and/or the block diagram.

The flowchart and the block diagram in the drawings show the possible architecture, functions and operations of the system, the method and the computer program product implemented in accordance with the present disclosure. In this regard, each block in the flowchart or the block diagram may represent a part of a unit, a program segment or instructions, which contains one or more executable instructions for implementing the specified logic function. In some alternative implementations, the functions labeled in the block may further occur in a different order from those labeled in the drawings. For example, two consecutive blocks may actually be executed in parallel, and sometimes can also be executed in a reverse order, depending on the function involved. It should also be noted that each block in the block diagram and/or the flowchart, and combinations of blocks in the block diagram and/or the flowchart, may be implemented by a dedicated hardware-based system that performs the specified functions or acts, or by the combination of dedicated hardware and computer instructions.

Each implementation of the present disclosure has been described above. The above description is an example, not exhaustive, and is not limited to the disclosed implementations. Without departing from the scope and spirit of the described implementations, many modifications and changes are obvious to ordinary skill in the art. The selection of terms used in the present disclosure aims to best explain the principles, practical application or improvement of technology in the market of each implementation, or to enable other ordinary skill in the art to understand the various embodiments disclosed herein.

## Claims

1. A method for information processing, comprising:
receiving a first user input comprising first description information related to a task on an application creation platform;
determining a target prompt input matching the first user input, the target prompt input comprising second description information related to the task, and the second description information comprising at least one of: description information obtained by adjusting at least a portion of the first description information, or an extended description for at least a portion of the first description information; and
providing the target prompt input to a model to obtain an indication of an execution operation of the task output by the model.

2. The method of claim **1,** wherein determining the target prompt input comprises:
determining, in a mapping relationship between user inputs and prompt inputs, that the first user input matches a target user input in the mapping relationship; and
determining, from the mapping relationship, a prompt input to which the target user input is mapped as the target prompt input.

3. The method of claim 2, wherein the mapping relationship comprises a mapping relationship between natural language sequences and prompt inputs.

4. The method of claim 2, wherein the target prompt input is mapped to a plurality of candidate user inputs in the mapping relationship, and wherein determining the target user input comprises:
determining respective matching degrees between the first user input and the plurality of candidate user inputs; and
selecting, based on the determined matching degrees, the target user input matching the first user input from the plurality of candidate user inputs.

5. The method of claim 1, wherein the task comprises a creation task for a target application or an adjustment task for at least a portion of the target application.

6. The method of claim 2, wherein the mapping relationship is specific to a target domain associated with the application creation platform.

7. The method of claim 1, further comprising:
presenting a reply to the first user input, the reply comprising the indication of the execution of the task, or comprising an indication of a task execution result of the task.

8. The method of claim 1, further comprising:
obtaining first user feedback information for the task; and
determining an adjustment to the target prompt input based at least on the first user feedback information.

9. The method of claim 8, wherein obtaining the first user feedback information comprises:
determining the first user feedback information based on a user operation behavior detected after the indication of the execution operation of the task or after completion of the execution of the task.

10. The method of claim 8, wherein determining the adjustment to the target prompt input comprises:
in accordance with a determination that the first user feedback information indicates that the execution of the task fails to meet an expected objective, determining that the target prompt input is to be adjusted.

11. The method of claim 1, further comprising:
obtaining second user feedback information that is feed back for a reply to a second user input, the second user input comprising description information of a task with a same type as the task; and
generating the target prompt input based at least on the second user feedback information.

12. An apparatus for information processing, comprising:
an input receiving module, configured to receive a first user input comprising first description information related to a task on an application creation platform;
a prompt determining module, configured to determine a target prompt input matching the first user input, the target prompt input comprising second description information related to the task, and the second description information comprising at least one of: description information obtained by adjusting at least a portion of the first description information, or an extended description for at least a portion of the first description information; and
a prompt providing module, configured to provide the target prompt input to a model to obtain an indication of an execution of the task output by the model.

13. An electronic device comprises:
at least one processor; and
at least one memory coupled to the at least one processor and storing instructions for execution by the at least one processor, the instructions, when executed by the at least one processor, causing the electronic device to perform the method according to any of claims 1 to 11.

14. A computer readable storage medium having stored thereon a computer program executable by a processor to implement the method according to any of claims 1 to 11.
